(19)

Europäisches
Patentamt
European
Patent Office
Office européen
des brevets

(11) **EP 2 264 433 A1**

(12) **EUROPEAN PATENT APPLICATION**

(43) Date of publication:
**22.12.2010 Bulletin 2010/51**

(51) Int Cl.:
*G01N 21/31* [(2006.01)]   *G01N 21/53* [(2006.01)]
*G01J 3/04* [(2006.01)]   *G01J 3/42* [(2006.01)]
*G01J 3/44* [(2006.01)]

(21) Application number: **09162819.8**

(22) Date of filing: **16.06.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicant: **Nederlandse Organisatie voor
Toegepast
-Natuurwetenschappelijk Onderzoek TNO
2628 VK Delft (NL)**

(72) Inventors:
 • **Brouwer, Egbert Anne Martijn**
  **2716 HW Zoetermeer (NL)**
 • **Perez Calero, Daniel**
  **1091 EB Amsterdam (NL)**

(74) Representative: **Hatzmann, Martin
Vereenigde
Johan de Wittlaan 7
2517 JR Den Haag (NL)**

(54)   **A method and system for the remote quantitative detection of compounds in the atmosphere**

(57)   A method and system for the remote quantitative detection of a compound in the atmosphere. A spectrometer (6) is attached to a moving platform (1) for measuring a light spectrum along a first path (10) between the spectrometer and a surface area (8). A second light spectrum is measured along a second path (7) between the spectrometer and said surface area (8) which second path has a length different from the first path. The two spectra are compared to determine the concentration of the compound.

Figure 1

**Description**

The present invention relates to a method for the remote quantitative detection of a compound in the atmosphere, comprising the use of a spectrometer attached to a moving platform for measuring a light spectrum along a first path between the spectrometer and a surface area.

The invention further relates to a system for the remote quantitative detection of a compound in the atmosphere comprising a movable platform and a spectrometer attached to the platform.

State of the art

Activity of man, in particular in the industrialized part of the world, results in the emission of compounds in the atmosphere. Those compounds may harm the atmosphere (e.g. halogenated hydrocarbons), may contribute to the so-called greenhouse effect (e.g. carbon dioxide) or may otherwise pollute the atmosphere (e.g. fine dust). Because the atmosphere is crucial for life on the earth, it is important to determine the effects not only of industrial emissions but also of natural emissions as a consequence of for instance forest fires and volcanic eruptions. In addition, there is also scientific interest in gaining knowledge about the composition and the variation in the composition of the earth's atmosphere and even atmospheres of remote planets.

The earth atmosphere comprises a large number of compounds. These include besides nitrogen, oxygen, water (vapour) also trace gases like $O_3$, $NO$, $NO_2$, $SO_2$, $CH_4$, $NH_3$, $CO$, $CO_2$, $N_2O$, $SF_6$. In addition the atmosphere comprises particles and aerosols like water droplets (rain, mist, clouds) and (fine) dust for instance in smog. Because these compounds absorb (and scatter) light at specific wavelengths, optical techniques can be employed to measure the amount of such compounds in the atmosphere. A wide-spread technique to measure the amount of different compounds in the atmosphere is spectroscopy. With this optical measuring technique a fingerprint of the atmosphere can be obtained by a spectrometer that detects the intensity of the incoming light (ultraviolet, infrared) as a function of the wavelength. Usually the part of the electromagnetic spectrum that is measured lies in a range between 200 nm and 3000 nm.

Differential Optical Absorption Spectroscopy (DOAS) is a technique to determine the concentration of trace gases. A spectrometer with a high spectral resolution is applied to measure the absorption spectrum. With DOAS the tracer gas concentration can be derived from the difference between the absorption spectrum of the atmosphere with and without the tracer gas. The use of two (or more) spectra allows elimination of common factors such as the sun spectrum and instrument parameters. The spectrum at and near the absorption wavelength without the tracer gas is determined by numerical filtering the high frequency part out of the measured spectrum. Actually, the features of the spectrum that vary slowly with the wavelength are eliminated, e.g. by fitting a polynomial to the spectrum. In this way only the spectral lines in the spectrum are preserved. This approach requires both a high signal to noise ratio (SNR) and a high spectral resolution.

Pollution of the atmosphere (due to e.g. traffic, industrial emissions) and the gases present in the atmosphere can be measured by a spectrometer attached to a satellite. Such methods are accurate because they allow measuring the absorption spectrum of the atmosphere during a long time-interval, typically during a few minutes. Long measuring times allow the detection of small signals, viz. low concentrations of the light absorbing gasses. A high spectral resolution can be obtained by such methods because a spectrometer with a narrow detection slit can be applied. Such a high spectral resolution allows an accurate detection of different types of pollution. The clear distinction between the intensity peaks of the spectrum and the gradual varying baseline caused by disturbing effects like reflections from the ground allows correction for contributions to the spectrum that can not be attributed to the composition of the atmosphere.

A disadvantage of methods for detecting pollution by a spectrometer attached to a satellite, is the low spatial resolution, typically in the order of 100 square kilometres. Another disadvantage is that a satellite allows measurement only at predetermined hours and days. Further it has to be realized that by using a satellite, the pollution is measured through the whole atmosphere between the earth surface and the satellite.

The composition of the atmosphere is also being measured by ground based observation sites, which observation sites are often part of a global network. Ground base measurements can be performed in a nadir geometry in which the detector is placed high above the surface, i.e. in an observation tower or can be performed by looking sideward towards the horizon or upward.

An evident disadvantage of ground based systems is their fixed location. In addition the nadir geometry allows only measurements close to the site whereas the horizontal geometry has a limited resolution due to the fact that the measurement path needs to be typically hundred metres to achieve a sufficiently high signal to noise ratio. In the upward looking geometry it is difficult to obtain the concentration of pollutants in the lowest part of the atmosphere because light that enters the spectrometer originates from all heights.

International patent application WO 02/04902 discloses a method for measuring gaseous emissions, based on using a ground based spectrometer for detecting the absorption spectrum of the atmosphere in a wave-length resolved manner. More in particular it discloses several methods to compensate for the background absorption as measured by the detector that is directed towards the sun. The first method comprises measuring the absorption spectrum at a location where the gas to be measured is absent or at a time when the gas is absent. The evident drawback of this method is that it is not possible to perform instantaneous measurements and that the accuracy will be limited due to variations of the atmosphere during the time between the two measurements. A second method comprises the use of an atmospheric model to calculate a synthetic background spectrum. A disadvantage of every model, how accurate it might be, is that it can not compensate for local or temporary effects other than those caused by the concentration of the compound to be detected. A third method comprises using a ray tracing algorithm calculating the variations in the optical path length (the air mass factor) between the sun and the detector which is a measure for the background absorption. A disadvantage is that data based on model calculations have to be used that are not based on the actual situation during measurement.

International patent application WO 2005/064316 discloses a system and method based on spectroscopic analysis, in particular differential absorption spectroscopy, for the remote quantitative detection of locally present gases, more specific the gases that leak from a pipeline. This patent application discloses a method to perform two measurements from an airborne platform, more particular an aircraft along a path in the direction of a target area, viz. the pipeline. A first measurement is performed at the absorption wavelength of the gas to be detected and a second measurement is performed to compensate for background intensity. The background is detected at a different wavelength than the absorption wavelengths of the gases that have to be detected. In this known system and method a laser beam is used to illuminate a target area. It further comprises means for path planning for the positioning of the airborne platform, as well as means for communicating the detected signal. Variations in the reflectivity of the background or target are compensated by measuring the absorption at a pre-selected specific wavelength that has a minimum interference with gases and particles present in the atmosphere and ground surface reflectivity.

One of the problems that have not been solved by this known method is the long measuring time that is needed to acquire data with a sufficiently high signal to noise ratio. To obtain a sufficient sensitivity with the method disclosed in WO 2005/064316, the apparatus comprises scanning mirrors to fix the laser beam during a part of the flight time at the target area and to detect the light coming from that target area while the aircraft is moving relative to the target area. This known method is suited for measuring compounds locally, for instance at a predetermined position on a pipeline. However, it is not suited for measuring compounds in a wider area because the spatial resolution in the flying direction is limited and determined by the flying speed and the time that is needed for one measurement. The problem of a low signal to noise ratio when a spectrometer is located on an airplane is also known from international patent application WO 99/63311. Here, the problem is solved by using a multi-slit feature in combination with a scanning mirror to freeze the image from the object for an integration time. However, this solution satisfies for analysis purposes of an object where a relative short integration time can be used. For the low signals available for the detection of compounds in the atmosphere, this solution does not satisfy.

So, the problem of the current spectroscopic methods for the detection of compounds in the atmosphere is that they require a very high signal to noise ratio (SNR), typically larger than 20000, to be able to measure absorption lines of for instance $NO_2$ at relevant concentration from an altitude of about 100 meters. Since the current art relies on the analysis of spectral lines, also a high spectral resolution is required. This combination of requirements results in very long integration times, which makes measurement from an airplane or any other moving platform especially when a large area is to be scanned hardly possible.

Summary of the invention

It is an objective of the present invention to provide a method for the remote quantitative detection of a compound in the atmosphere comprising the use of a spectrometer on a moving platform for measuring a light spectrum along a first path between the spectrometer and a surface area. A moving platform according to the present invention is any structure that is constructed to move or being displaced in the space above a surface like the earth surface, either being connected to this surface or not.

More in particular it is an objective of the invention to detect the compound in the atmosphere fast and with a high spatial resolution.

This objective of the invention is obtained by measuring a second light spectrum along a second path between the spectrometer and said surface area which second path has a length different from the first path and by comparing the two spectra to quantify the compound. This allows the determination of low concentration compounds in the atmosphere.

The advantage of measuring a second spectrum along a different path between the same surface area and a spectrometer is that the measurements need not to performed with a high spectral resolution because two spectra are obtained that have essentially an identical background, in particular have the same reflection from the surface, but which spectra are different due to the difference in absorption along both paths.

The effect of the two spectra having an identical background contribution from the surface reflection is that the difference of the spectra is essentially caused by the difference in path length. Comparison of the two spectra, more in particular determining the ratio between the intensities at the measured wavelengths, provides a spectrum of the atmosphere, including the compound to be detected, only. In addition, this comparison allows that in stead of high resolution spectral lines, slow varying features of the spectrum can be used to detect the compound. When a spectrum need not to be measured with a high spectral resolution, then the slit through which the light is detected can be larger, resulting in a more sensitive (higher light input) measurement.

In the method of this invention, the concentration of the compound or a plurality of compounds is derived from the broad absorption band, not from the spectral lines of the individual compounds. As a consequence the demands on the signal to noise ratio are not as high as in spectroscopic methods using the spectral lines for quantification of the compounds. Further, the method according to the invention allows a measurement with a relatively low spectrometer resolution. With reduced resolution, a higher signal to noise ration (SNR) can be achieved.

It is another object of the present invention to provide a system for the remote quantitative detection of a compound in the atmosphere, comprising a movable platform and a spectrometer attached to the platform

More in particular it is an objective of the invention to provide a system to detect the compounds in the atmosphere fast and with a high spatial resolution.

This objective of the invention is obtained by a spectrometer that comprises a relatively wide slit having a width that is larger than 25 micrometer, preferably larger than 50 micrometer, more preferably larger than 150 micrometer, and the system being constructed to measure light spectra along two different paths between a surface area and a spectrometer. Further the system comprises a computer for performing calculations on the spectra to quantify the compound. Such a system allows the quantitative measurement of low concentration compounds in the atmosphere in a fast way and with a high spatial resolution.

The effect of the wide slit is that the detector of the spectrometer receives more light than when using a smaller slit. As a consequence the signal to noise ratio is increased, resulting in a more accurate measurement. By measuring two spectra along different paths but having an identical background, the contribution from the surface reflection the contribution of the compound to the measured spectra can be distinguished from other contributions like the spatially varying reflectivity of the surface area. Further calculations, including possible data storage, data pressing and fitting of the spectrum to a numerical description of the spectrum, allow the quantitative determination of compounds in the atmosphere with a short measuring time.

Brief description of the figures

Figure 1 schematically illustrates an embodiment of the method wherein the spectra are obtained in a forward direction of a moving platform.
Figure 2 schematically illustrates an embodiment of the method wherein the spectra are obtained in a backward direction of a moving platform
Figure 3 schematically illustrates an embodiment of the method wherein an additional spectrum of the sun is obtained.
Figure 4 illustrates the determination of the concentration where the spectra are filtered after being compared.
Figure 5 illustrates the determination of the concentration where the spectra are filtered before being compared.
Figure 6 shows a method to correct for variations in the spectrum of the sun.
Figure 7 shows schematically an embodiment of the system.
Figure 8 shows an embodiment of an apparatus for measuring at least two spectra
using only one detector.
Figure 9 shows a normalized spectrum as measured.
Figure 10 shows a normalized spectrum after filtering.

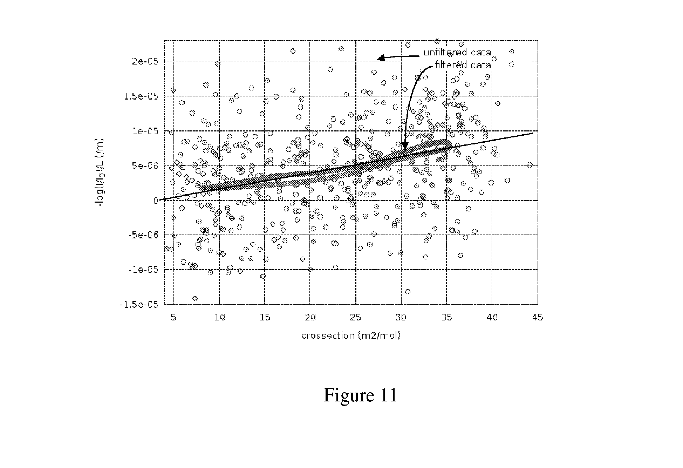

Figure 11 shows a plot of the data used for fitting.

Detailed description the figures

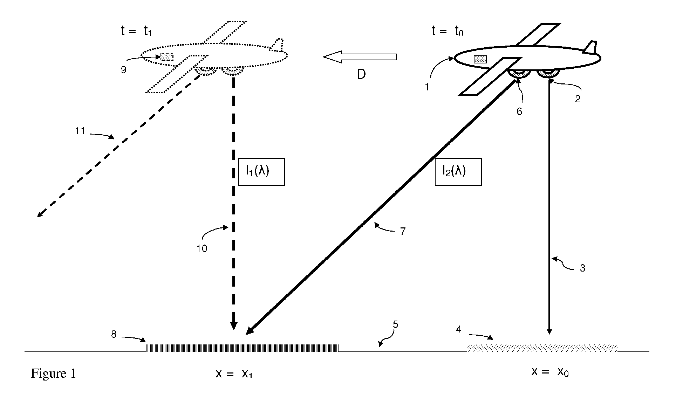

Figure 1 illustrates a method to obtain the spectra in forward direction of a moving platform, according to an embodiment of the invention. The figure shows the position of an aircraft (1) at two moments. Initially the aircraft, drawn with solid lines, is at a first position. Flying in the direction indicated by D, the aircraft drawn with dashed lines, arrives at a second position. In both positions, spectra are measured as will be described in more detail in the following. An aircraft (1), for instance an unmanned aircraft, comprising a spectrometer (2) measures the spectrum in the direction (3) of a first area (4) at location $x = x_0$ of surface (5) at time $t = t_0$. At the same time a second spectrometer (6), also arranged in the aircraft (1), measures the spectrum $I_2(\lambda)$ in the direction (7) of a second area (8) at location $x = x_1$, which spectrum is stored in for instance a computer memory connected with the spectrometer for receiving the data representing the spectrum. The second spectrometer is used to allow simultaneous measurement of two spectra. However, it is also possible to use only one spectrometer and measuring the spectra sequentially, at the expense of the signal to noise ratio.

After some time $t = t_1$, during which the aircraft flies in a direction (D) being the horizontal component of said direction (7), the first spectrometer measures the spectrum $I_1(\lambda)$ in the direction (10) of said second area (8). This spectrum is sent to the computer memory for further processing together with the stored spectrum obtained from the earlier measurement in the direction (7) of the second area (8). Essentially at the same time $t = t_1$, the second spectrometer measures the spectrum in the forward direction (11). The source of the light might be the sun, but it is appreciated that also a laser might be used as a source for the light. The laser can be directed towards to an area reflecting this light towards the spectrometer.

The aircraft or any other platform may comprise a computer (9) for data storage, data processing and data analysis or telecommunication equipment for sending data to a ground station, either directly or via a satellite, for further processing and analysis. The measured spectra will further be compared to quantify the compound. Some of the embodiments for this comparison are described below and illustrated in several figures.

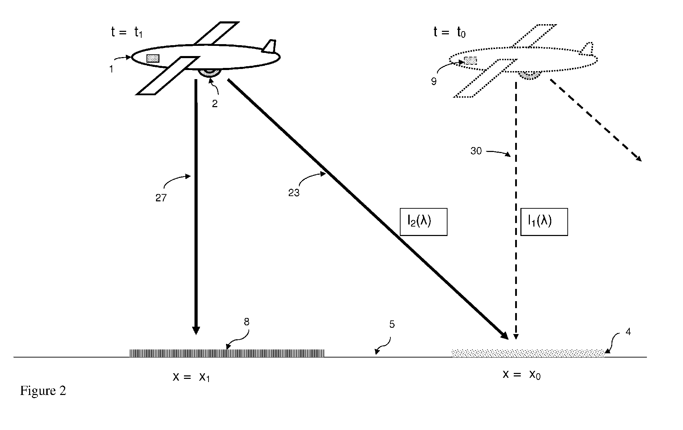

Figure 2 illustrates a method to obtain the spectra in backward direction of a moving platform, according to the invention. An aircraft (1) comprising a spectrometer (2) measures the spectrum in the direction (23) of a first area (4) at location $x = x_0$ of surface (5) at time $t = t_1$. Preferably essentially at the same time a second spectrometer also located in or at the aircraft measures the spectrum in the direction (27) of a second area (8) at location $x = x_1$, by analogy with the embodiment described in figure 1. However, it is also possible to use the same spectrometer (2) in a time-shared (multiplexed) way. Of course this reduces the time available for each measurement but this embodiment has the advantage that just one spectrometer is needed. The computer memory (9) connected with the spectrometer for receiving the data representing the spectrum already contains the data from a previous measurement at $t = $ to in the direction (10) of said first area (4). The data obtained from the previous measurement at $t = $ to in the direction (3) from the first area (4) are further processed together with the data obtained from the first area (4) at $t = t_1$ in the direction (23).

In the figures (1) and (2) one of the directions for measuring the spectra is essentially vertical. In specific embodiments of the invention it will be preferred that the afore mentioned vertical direction deviates from the strict vertical, in any of the directions, either forward, backward or sideward to avoid that the measured spectrum is disturbed by the shadow of the platform carrying the spectrometers. However, there might also be reasons to have a larger deviation from the vertical, for instance when the platform is a ground bound platform like a train or other vehicle and the spectra are obtained by viewing in a sideward direction. It is appreciated that the path length, in particular if the moving platform is relatively close to the surface, can be increased by measuring the spectra along a path with a small slope relative to the surface.

Preferably, the two measuring directions significantly deviate form each other of obtain a path length difference that is sufficient to obtain two different spectra. When one measurement is performed in the vertical downward direction, then the second direction might be typically between 40 and 80 degrees either in the flying (forward) direction of the aircraft or in the backward direction. However, also smaller or larger angles might be used to increase the path length of the measurement.

Preferably, the spectra are recorded using a two dimensional detector that allows measuring the spectra spatially resolved in the sideward direction, viz. the direction perpendicular to the flying direction. Using such a two dimensional detector allows a relative long distance between the tracks of the moving platform in a situation where a large area has to be measured. In embodiments where the spectrometer has to be directed, for instance rotated, to view in different directions, optical components known to those skilled in the art can be applied. Such components comprise lenses, mirrors, prisms, transmission gratings, and reflection gratings.

The area (4) and area (8) need not to be adjacent areas to obtain a full coverage of the surface (5). Basically the number of intermediate target areas is determined by the angle between the two measurement directions. The areas might be discrete areas when the spectrometer measures during a certain time in the direction of such a discrete target area during that time, e.g. by using a scanning mirror. However, the spectra can also be obtained (semi) continuously by a spectrometer with a fixed viewing angle. Although it is preferred that the target areas are in parallel with the moving direction of the platform (either forward or backward), it is also possible that one or both paths are mainly or partly in a sideward direction. When one of the paths or both paths are mainly in such a parallel direction then the moving platform will move according to a zigzag pattern above the total area that has to be measured.

In the figures (1) and (2) two spectra are obtained in two directions from a specific target area. Although such a set-up will satisfy in most cases, it is also possible to obtain more spectra from more than two directions from the same target area.

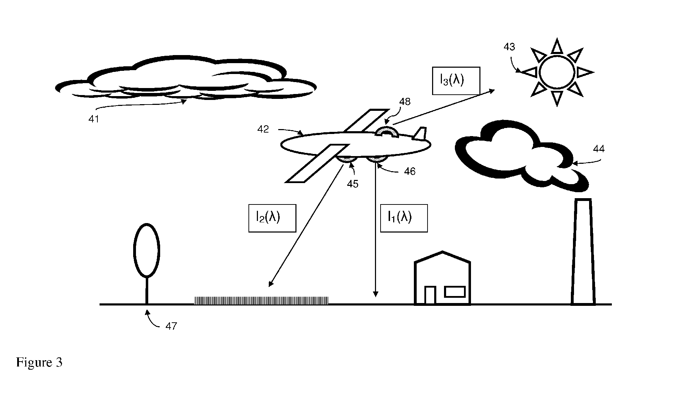

Figure 3 shows an embodiment of the invention that might be advantageous in situation where there is a fast variation in the illumination spectrum during recording the spectra in the downward direction. Such a situation might be caused by natural clouds (41) between the platform (42) and the sun (43), but the origin of such variation might also be local pollution (44) extending to high levels in the atmosphere. In this embodiment the platform, which might be an aircraft, comprises not only one or two spectrometers (45, 46) for measuring the light spectra in two directions towards the surface (47), but it also comprises a spectrometer (48) viewing in a direction turned away from the earth surface, preferably in a mainly perpendicular direction or in a direction towards the sun, to measure the absorption spectrum $I_3$ ($\lambda$) of the air. The signal of this additional spectrometer is used to correct the signal of any ground looking detector for variations in the spectrum of the incident light, i.e. due to clouds. The correction can be performed according to methods known to those skilled in the art. For example, the intensities in the downward directions can be divided by the intensity in the upward direction.

The intensity of the light that has been travelling along a path through the atmosphere is described by the Lambert-Beer law:

$$I(\lambda) = I_0(\lambda) * \exp[-L * \sum_i \alpha_i(\lambda)*c_i].$$

Herein, $I(\lambda)$ is the measured intensity at wavelength $\lambda$, $\alpha_i$ the absorption coefficient or cross section for the compound i at wavelength $\lambda$, $c_i$ the concentration of the compound i, and L the length of the light path from the source with intensity $I_0(\lambda)$ to the detector. For any given signal to noise ratio for the measurement of $I/I_0$, the measurement sensitivity can be increased by increasing the path length L. Usually light source will be the sun, but also other sources of light with the appropriate spectrum may satisfy.

So, preferably the spectrum $I_3(\lambda)$ is measured simultaneous with each of the spectrum $I_1(\lambda)$ or $I_2(\lambda)$ that has to be corrected for the varying spectrum of the sun light. This mains that $I_3(\lambda)$ is measured at time $t = t_1$ when spectrum $I_1(\lambda)$ is measured and at $t = t_2$ when spectrum $I_2(\lambda)$ is measured. Although it is preferred to use one or two additional spectrometers for measuring the additional spectrum, it is appreciated that the additional spectrum can also be obtained from one of the other spectrometers or from the sole spectrometer. In such cases displaceable mirrors, gratings or other optical components like fibres can be used to measure the spectrum along the desired path.

A moving platform according to the present invention is any structure that is constructed to move or being displaced in the space above a surface, either being connected to this surface or not. Examples of such platforms are not only aircrafts, helicopters, balloons, guided and unguided missiles, but also ground-bound objects like cars and trains. Preferably the platform comprises a system to determine its position and to correlate this position with the obtained data. The position of the platform and thus the measured spectrum can be related to a position on the ground by a Global Positioning System (GPS) or any other adequate system for determining the position of the moving platform and the target area. Although it is preferred that the platform comprises a positioning system itself, the method of the present invention comprises also method in which the position is measured by external mains like radar.

In a specific embodiment of the invention, the route of an unmanned or manned aircraft might be pre-programmed to measure pollution above a predefined area of interest or its route might be determined during flight to monitor actual pollution when harmful or toxic gasses are emitted into the atmosphere, i.e. after an accident in a chemical plant.

The method according to the invention advantageously compensates for variations in the background (sun light, clouds, pollution) or the reflectivity of the target area. Variation in time at a given position, for instance due to moving clouds, or different reflectivity at distinct positions is compensated.

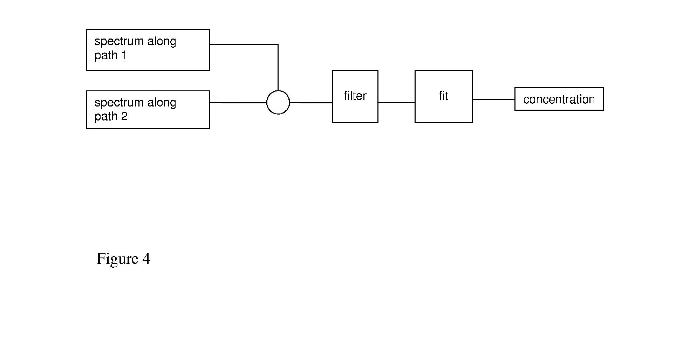

Figure 4 shows schematically how the data processing can be performed according to an embodiment of the present invention, in order to obtain the concentration of a compound. In this embodiment of the invention, the two spectra that are obtained by viewing the same target area are compared to each other to obtain a difference spectrum. Subsequently, this difference spectrum is filtered to obtain a low bandwidth spectrum comprising only low frequent variation in the intensity as a function of the wavelength. The filtering can be performed by methods known to those skilled in the art. Any method that filters the high frequencies of the spectra satisfies. This might for instance be a digital Fourier filtering. The filtered data, viz. the "smoothed" data are fitted to the Lambert-Beer law to obtain the concentration of the compounds that have to be detected.

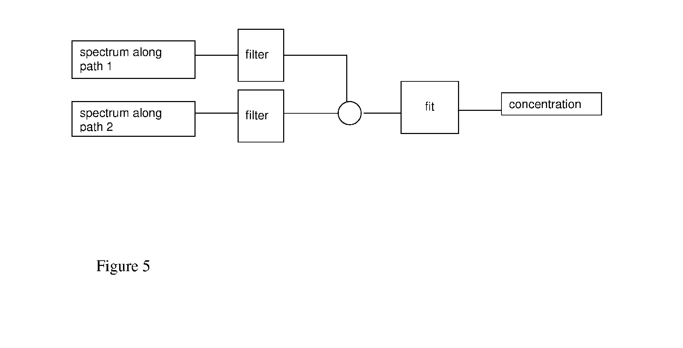

Figure 5 shows schematically how the data processing can be performed according to another embodiment of the present invention, in order to determine the concentration of a compound. In this embodiment, the measured spectra are filtered before being compared. Generally the filtering will be performed similar to the methods mentioned above. However, the effect of digital or analogue filtering might also be obtained by using an extreme wide slit for detecting the spectrum. Whereas typically slit width between 50 and 250 micrometer will be used in the method, the invention also comprises the use of a wider slit. The filtered spectra are compared to each other to obtain a difference spectrum. The "smooth" spectrum is fitted to the Lambert-Beer law to obtain the concentration of the compounds that have to be detected.

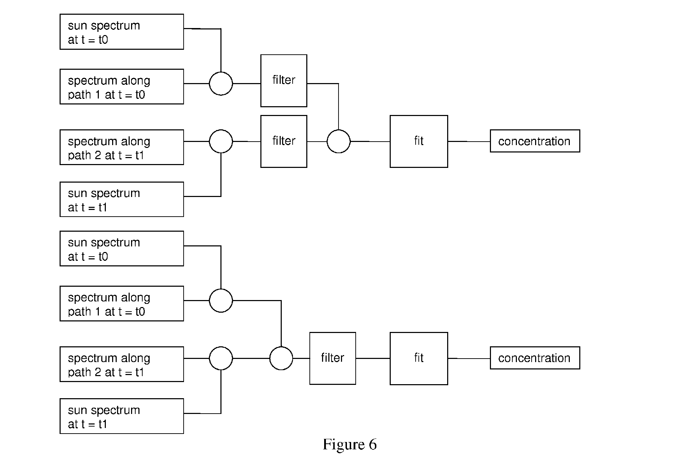

Figure 6 shows schematically how the data processing can be performed according to an embodiment of the present invention, when in addition to the downward spectra, also the spectrum of the incident light is measured. In particular this embodiment shows correction for variations in the spectrum of the sun light. For this purpose the spectrum measured along each path to the target area is compensated for the variation in the sun spectrum. Preferably the sun spectrum is measured at the same time as the spectrum that has to be compensated. The compensation might be performed before filtering as indicated in figure 6. However, it is also possible to compensate after filtering. Eventually, the sun spectrum and/or the measured ground viewing spectra can be filtered before the later spectra are compensated.

In the embodiments of figures 4, 5, and 6 the filtering the signal is performed at different stages of the data processing. Actually it is appreciated that that the filtering can be performed either directly after measuring the spectra or at any data processing step afterwards. Filtering of the spectra has the additional advantage that the amount of data can be reduced. This might be of particular interest if the data have to be transmitted from an aircraft to a base station during the flight, or if the data have to be stored.

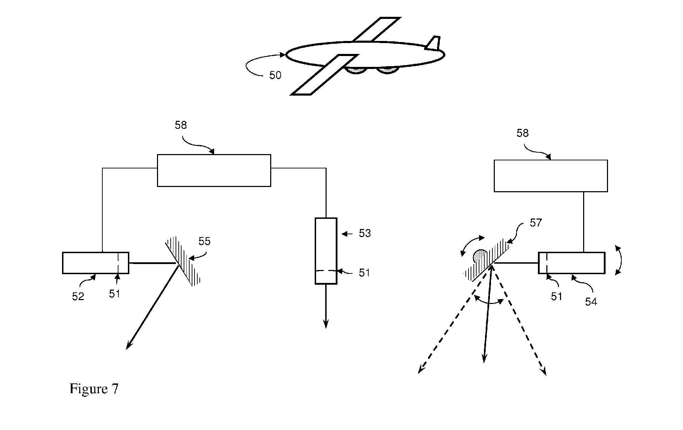

Figure 7 illustrates two embodiments of a system according to the invention. Both embodiments comprise at least one spectrometer (52, 53, 54) with a slit (51) that is wider than 50 micrometer. The spectrometer is attached to a moving platform (50), for instance an aircraft, a helicopter or a balloon. The system further comprises optical elements for measuring light spectra along two different paths between a surface area and a spectrometer. It is appreciated that a spectrometer may comprise a grating or a prism, lenses, mirrors, and possibly filters for filtering the light. In addition, however the system may comprise a mirror that is either fixed (55) or can be rotated (57) to define the optical path between the surface area and the spectrometer. The system may comprise only one spectrometer (54) that can be rotated or otherwise directional adjusted to define at least two light paths between the spectrometer and the surface area. Also two spectrometers (52, 53) can be used, either at a fixed position or rotational attached to the aircraft. To quantify the analysis of the measured data, the system comprises a computer (58) for performing calculations on the spectra. It is appreciated that such a computer may be attached to the platform (5) or it may be located elsewhere. In the later case the measured spectra can be transferred to the computer on line by wireless communication or off-line after performing the measurements and the aircraft returned to a base. For the off-line analysis of the data, the platform may comprise an apparatus for data storage, for instance a computer.

The present invention relates both to passive remote sensing using the sun as the light source, as well as active remote sensing in which an artificial light source such as a laser is used. The remote sensing can be carried out from platforms located in space (i.e. satellite), at a high level in the atmosphere (i.e. balloon), at a low level above the surface (i.e. helicopter) or at the ground (i.e. car). The laser might be a tuneable laser or a laser with a fixed wavelength having preferably a wide bandwidth. Nevertheless also lasers having a small bandwidth can be applied in specific embodiments. In case that a laser is used, the wavelength is preferably chosen so as to comprise the absorption wavelength of the gas and/or component to be measured. Such a wavelength or bandwidth results in the highest signal to noise ratio with lowest interference with other gases, compounds or particles in the atmosphere.

For measurements in the earth atmosphere the absorption spectrum is measured between 200 nm and 3000 nm, more specifically between 300 nm and 800 nm for most tracer gasses and aerosols. If one is only interested in gases like $NO_2$ or ammonia ($NH_3$) the spectrum can be further confined to 300-550 nm. If one is interested in the concentration of small particles in particular fine dust, then the spectrum below 600nm is of particular interest.

The measured intensity at a specific wavelength $\lambda$ depends on the intensity of the sun light $I_{sun}(\lambda)$, the absorption by the atmosphere between sun and surface $A_{sun-gnd}(\lambda)$, the reflectivity of the surface area $R_{ground}(\lambda)$ and the absorption in the atmosphere between the aircraft en the ground $A_{gnd-det}(\lambda)$:

$$I_{measured}(\lambda) = I_{sun}(\lambda) * A_{sun-gnd}(\lambda) * R_{ground}(\lambda) * A_{gnd-det}(\lambda)$$

According to the method of the invention, two spectra are measured in the direction towards the same surface area. In the situation where the intensity or spectrum of the sun light does not vary from the two measurements, the difference between the two spectra is only determined by the path length differences:

$$I_1(\lambda) / I_2(\lambda) = A_{L1}(\lambda) / A_{L2}(\lambda)$$

where $A_{L1}(\lambda)$ is the absorption for the light with wavelength $\lambda$ along path L1 and $A_{L2}(\lambda)$ is the absorption along path L2.

Whereas the absorption is defined as $A_L(\lambda) = \exp[-L * \Sigma_i \alpha_i(\lambda)*c_i]$, the concentration of all compounds in the atmosphere can be obtained by fitting if one knows the type of compounds present in the atmosphere and their absorption cross-sections. Those skilled in the art know where to obtain these figures.

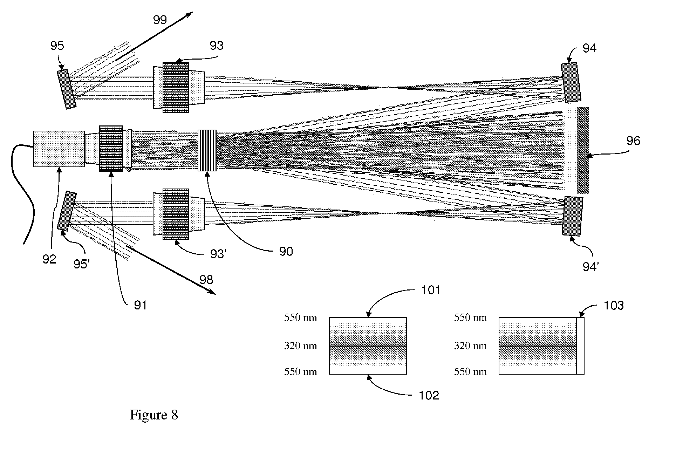

Figure 8 shows an embodiment of an apparatus for measuring two spectra with one detector in two different directions (98, 99). The advantage of using one detector is that the weight of the equipment will be less. In particular when the moving platform is a small unmanned aircraft, weight reduction is highly appreciated. The light coming from the two different directions is folded by a folding mirror (95) and projected by an objective (93) on a collimating mirror (94). The light is directed towards an detection element (92) via a grating (90) and the field mirror. The detection element can be might be any type of detector, like a CCD or CMOS camera, suitable for detecting the light spectrum. The detection element is placed outside the plane formed by the objectives (93, 93') and the folding mirrors (95, 95'). The specific arrangement of the optical elements allows that the detector detects the two spectra (101, 102), in this embodiment between 320 nm and 550 nm, simultaneously. With additional optical elements that are not shown in this figure, it is possible to provide the detector also with the measured spectrum of the sun (103). In this embodiment the two different light paths use the same grating. In other embodiments each light path may have its own prism and/or grating. Both transmission grating and reflection gratings can be used.

Example

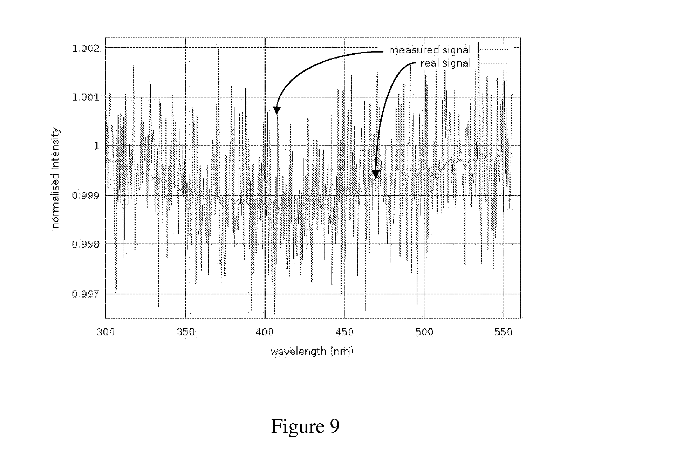

For the measurement of the concentration of $NO_2$, the spectra $I_1$ and $I_2$ are preferably measured between 300 nm and 560 nm. An example of a measured spectrum based on simulation, is shown in figure 8 (also shown is the "real" spectrum as it would look like if there would be no noise). The width of the spectrometer slit can be as large as 250 micrometer or even more, being a factor 5 higher than the standard slit width for such measurements. The flying platform can be a helicopter that is flying at an altitude h of 150 m above the surface. The spectra are measured at a distance L. By digital Fourier filtering the high frequency components are filtered out to reduce the noise and to remove all the spectral lines, thus retaining only the low frequency part as is illustrated in figure 9. A Gaussian filter is used to avoid aliasing (width: 0.015 nm$^{-1}$). Such a filtering typically decreases the rms value of the noise with about a factor 7. The shape of the broad absorption peak obtained by the filtering is used for further data processing.

The filtering can be performed either on the two measured spectra before determining the ratio between the two spectra, on the ratio $I1(\lambda)/I2(\lambda)$ of the two spectra, or on the logarithm of the spectra or their ratio. Actually, the filtering can be performed at any data processing step after the measurement of the spectra.

After filtering, the spectrum $I_1(\lambda)/I_2(\lambda)$ is fitted to

$$\log\left(\frac{I_1(\lambda)}{I_2(\lambda)}\right) = -\left(\sqrt{\left(\frac{L}{h}\right)^2 + 1} \ -1\right)\sum_i \alpha_i(\lambda) \times c_i$$

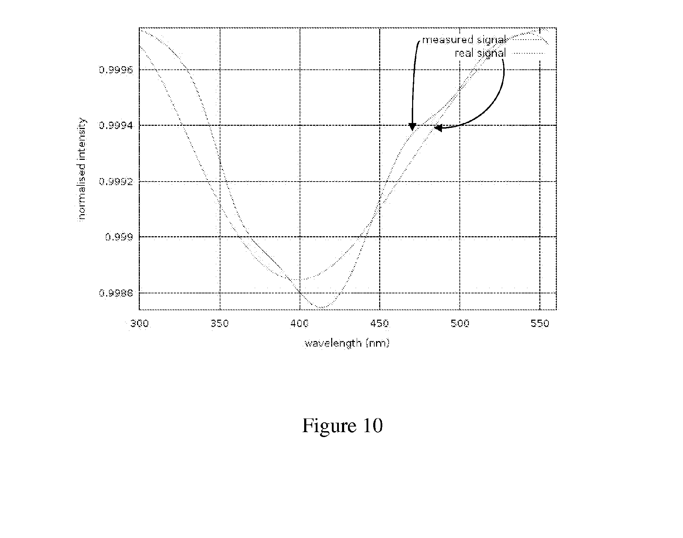

to obtain the concentration $c_i$ of the individual components in the air on the basis of their known absorption coefficients or cross section. Figure 10 illustrates the effect of the filtering resulting in much less scatter in the intensity as a function of the cross section. The filtered data are fitted.

Simulation at 10 $\mu$g/m$^3$ (being about 25% of the harmful $NO_2$ concentration) reveals that even the poor resolution of about 5 nm results in accurate determination of the concentration $NO_2$ in the atmosphere.

In common systems comprising a spectrometer for measuring the spectrum, often optical gratings are needed to provide an optical system with the required high resolution. The method according to the present invention, however, allows also using a prism for the dispersion of the incoming light. Using a prism instead of a grating results in a higher light input. Depending on the equipment used and the pollution to be measured, either a prism or a grating can be applied in the invention. It will be understood by those skilled in the art that the present invention is not limited to the embodiments illustrated above and that many modifications and additions may be made without departing from the scope of the invention as defined in the appending claims.

**Claims**

1. A method for the remote quantitative detection of a compound in the atmosphere comprising the use of a spectrometer attached to a moving platform for measuring a light spectrum along a first path between the spectrometer and a surface area, **characterized in that** a second light spectrum is measured along a second path between the spectrometer and said surface area which second path has a length different from the first path and **in that** the two spectra are compared to quantify the compound.

**2.** A method according to claim 1, wherein the two paths are mainly in a direction of movement of the platform.

**3.** A method according to claim 1 or claim 2, wherein the sun is the source of light.

**4.** A method according to any of the preceding claims, wherein the spectra are filtered to reduce the noise.

**5.** A method according to any of the preceding claims, wherein additionally the spectrum of the incident light is measured to correct the measured spectra for variations of the incident light.

**6.** A method according to any of the preceding claims, wherein the measured spectra are filtered before being compared or corrected.

**7.** A method according to any of the preceding claims, wherein the compound is quantified by fitting the spectrum obtained after comparing the measured spectra, to an expression for an absorption spectrum.

**8.** A method according to any of the preceding claims, wherein the compound is nitrogen dioxide or fine dust.

**9.** A system for the remote quantitative detection of a compound in the atmosphere comprising a movable platform and a spectrometer attached to the platform, **characterized in that**

- the spectrometer comprises a slit having a relatively large width, **in that**
- the system is constructed to measure light spectra along two different paths between a surface area and a spectrometer, and **in that**
- the system further comprises a computer for performing calculations on the spectra to quantify the compound.

**10.** A system according to claim 9, wherein the slit has a width larger than 25 micrometer.

**11.** A system according to claim 10, wherein the slit has a width larger than 50 micrometer, preferably larger than 150 micrometer.

**12.** An optical apparatus comprising a single detector and optical elements, which apparatus is suitable for measuring at least two spectra according to the method of any of the claims 1 to 8 or is suitable for use in the system of claim 9, 10 or 11.

Figure 1

$t = t_1$

1

2

27

23

$I_2(\lambda)$

$t = t_0$

9

30

$I_1(\lambda)$

8

5

4

$x = x_1$

$x = x_0$

Figure 2

Figure 3

Figure 4

Figure 5

Figure 6

Figure 7

Figure 8

Figure 9

Figure 10

Figure 11

Europäisches
Patentamt

European
Patent Office

Office européen
des brevets

## EUROPEAN SEARCH REPORT

Application Number

EP 09 16 2819

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 298 751 A (FEE MAURICE L [US] ET AL) 29 March 1994 (1994-03-29) | 1-4,6-12 | INV. G01N21/31 |
| Y | * column 2, line 54 - column 6, line 13; figures 1-4 * | 5 | G01N21/53 G01J3/04 G01J3/42 |
| Y | US 2005/151965 A1 (BISSETT WILLIAM P III [US] ET AL BISSETT III WILLIAM PAUL [US] ET AL) 14 July 2005 (2005-07-14) * paragraph [0094]; figure 1 * | 5 | G01J3/44 |
| A | US 5 294 796 A (FEE MAURICE L [US]) 15 March 1994 (1994-03-15) * column 5, lines 18-50; figure 2 * | 12 | |
| A | STEVEN M D ET AL: "Estimation of atmospheric corrections from multiple aircraft imagery" INTERNATIONAL JOURNAL OF REMOTE SENSING UK, vol. 7, no. 4, April 1986 (1986-04), pages 481-497, XP009121529 ISSN: 0143-1161 * the whole document * | 1,3,5,9 | |

TECHNICAL FIELDS
SEARCHED     (IPC)

G01N
G01J

The present search report has been drawn up for all claims

| Place of search | Date of completion of the search | Examiner |
|---|---|---|
| Munich | 18 August 2009 | Duijs, Eric |

EPO FORM 1503 03.82 (P04C01)

**EP 2 264 433 A1**

## ANNEX TO THE EUROPEAN SEARCH REPORT
## ON EUROPEAN PATENT APPLICATION NO.

EP 09 16 2819

18-08-2009

| Patent document cited in search report | | Publication date | Patent family member(s) | | Publication date |
|---|---|---|---|---|---|
| US 5298751 | A | 29-03-1994 | WO | 9319357 A1 | 30-09-1993 |
| US 2005151965 | A1 | 14-07-2005 | NONE | | |
| US 5294796 | A | 15-03-1994 | WO | 9318392 A1 | 16-09-1993 |

EPO FORM P0459

**EP 2 264 433 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0204902 A
- WO 2005064316 A
- WO 9963311 A